# FASCICULE DE BREVET EUROPEEN

(11) **EP 3 465 561 B1**
(45) Date de publication et mention de la délivrance du brevet: **23.06.2021**
(21) Numéro de dépôt: 17717140.2
(22) Date de dépôt: 10.04.2017
(51) Int. Cl.: G06Q 10/04, B65G 1/137

(54) **SYSTÈME DE STOCKAGE TAMPON ET DE SÉQUENCEMENT DE CHARGES COMPRENANT DEUX ÉLÉVATEURS**
SYSTEM ZUR PUFFERSPEICHERUNG UND SEQUENZIERUNG VON GEGENSTÄNDEN MIT ZWEI AUFZÜGEN
A SYSTEM FOR BUFFER STORAGE AND SEQUENCING OF ITEMS COMPRISING TWO ELEVATORS

(30) Priorité: 30.05.2016 FR 1654863
(43) Date de publication de la demande: 10.04.2019
(73) Titulaire: SAVOYE, 21000 Dijon (FR)
(72) Inventeur: PIETROWICZ, Stéphane, 21220 Fixin (FR); COLLIN, Jean-Michel, 21190 Merceuil (FR)
(74) Mandataire: Vidon Brevets & Stratégie
(86) Numéro de dépôt international: PCT/EP2017/058563
(87) Numéro de publication internationale: WO 2017/207152

(56) Documents cités:
- EP-A1- 1 681 247
- DE-U1- 29 724 039
- FR-A1- 2 989 070
- US-A1- 2015 158 677

## Description

### 1. DOMAINE TECHNIQUE

Le domaine de l'invention est celui de la logistique.

La présente invention concerne plus précisément un système de stockage tampon et de séquencement de charges, configuré pour recevoir des charges non séquencées provenant d'au moins une unité externe (par exemple un magasin automatisé de stockage/déstockage) et fournir des charges séquencées à au moins un poste de préparation. Par « fourniture de charges séquencées », on entend la fourniture, sous une contrainte de délivrance, d'au moins une séquence comprenant des charges dans un ordre voulu.

La présente invention peut s'appliquer à n'importe quel type de poste de préparation, et notamment mais non exclusivement :
- aux postes de préparation de commandes (aussi appelés « postes de picking »), par prélèvements de produits dans des contenants de stockage (aussi appelés « charges sources ») : un opérateur (ou un robot) reçoit une liste de prélèvements (sur papier, sur écran d'un terminal, sous forme vocale, sous forme de mission informatique (dans le cas du robot), etc.) lui indiquant, pour chaque colis à expédier (aussi appelé «contenant d'expédition » ou « charge cible »), la quantité de chaque type de produits qu'il doit collecter dans des contenants de stockage et regrouper dans le colis à expédier ; et
- aux postes de palettisation de contenants de stockage (aussi appelés « charges sources ») contenant eux-mêmes des produits : un opérateur (ou un robot) reçoit une liste de prélèvements (sur papier, sur écran d'un terminal, sous forme vocale, sous forme de mission informatique (dans le cas du robot), etc.) lui indiquant, pour chaque palette à expédier (aussi appelée « contenant d'expédition » ou « charge cible »), la quantité de chaque type de contenants de stockage (par exemple des cartons) qu'il doit collecter et décharger sur la palette à expédier.

### 2. ARRIÈRE-PLAN TECHNOLOGIQUE

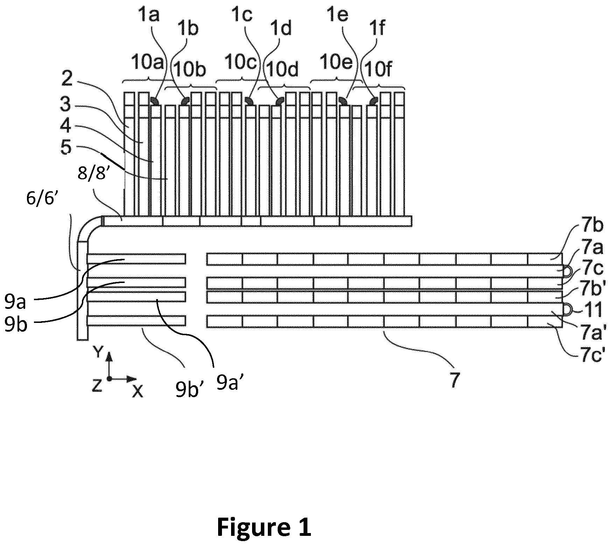

On présente maintenant, en relation avec la **figure 1****,** une vue de dessus d'un exemple de configuration connue pour un système automatisé de préparation de commandes comprenant :
- un magasin automatisé de stockage/déstockage 7 comprenant plusieurs (deux dans cet exemple) ensembles formés chacun d'une allée 7a, 7a' desservant de part et d'autre une étagère de stockage 7b, 7c, 7b', 7c' à plusieurs niveaux de rangements superposés ;
- un ensemble de convoyeurs amenant les charges sources depuis le magasin automatisé 7 jusqu'à des postes de préparation, et réciproquement. Dans l'exemple de la figure 1, on distingue :
   ∘ pour l'aller (c.-à-d. du magasin automatisé 7 jusqu'aux postes de préparation), des convoyeurs référencés 9a et 9a' (un par allée) ainsi que 6 et 8 ; et
   ∘ pour le retour (c.-à-d. des postes de préparation jusqu'au magasin automatisé 7), des convoyeurs référencés 8', 6' ainsi que 9b et 9b' (un par allée) ; dans cet exemple, les convoyeurs 6'et 8' sont superposés aux convoyeurs 6 et 8 ;
- plusieurs postes de préparation de commandes 10a à 10f, occupés chacun par un opérateur la à 1f et s'étendant perpendiculairement aux convoyeurs référencés 8 et 8' ; et
- un système de pilotage (aussi appelé « unité de pilotage »), qui est un système informatique de gestion central ayant en charge le pilotage de l'ensemble du système (magasin automatisé de stockage/déstockage 7, ensemble de convoyeurs 6, 6', 8, 8', 9a, 9a', 9b et 9b', et postes de préparation 10a à 10f).

Le système de pilotage gère également la liste de commandes associée à chaque contenant d'expédition (charge cible) et donc l'ordre des lignes de commande formant cette liste, en fonction de l'emplacement des contenants de stockage (charges sources) dans le magasin automatisé 7, de la disponibilité des chariots et des élévateurs du magasin automatisé 7, ainsi que des besoins en produits des différents contenants d'expédition à préparer qui se succèdent au poste de préparation. Ceci a pour but d'optimiser tous les déplacements et les temps de préparation des contenants d'expédition et d'assurer la synchronisation entre l'arrivée, au poste de préparation, d'un contenant d'expédition et des contenants de stockage correspondants (c-à-d contenant les produits indiqués dans la liste de commande associée à ce contenant de stockage).

Dans l'exemple de la figure 1, chaque poste de préparation comprend deux circuits de convoyeurs : un premier circuit de convoyeurs pour les contenants de stockage, formé de deux colonnes horizontales de convoyeurs : l'une (colonne aller 3) pour le déplacement des contenants de stockage depuis le troisième sous-ensemble de convoyeurs 8 jusqu'à l'opérateur la, et l'autre (colonne retour 2) pour le déplacement inverse ; et un deuxième circuit de convoyeurs pour les contenants d'expédition, formé de deux colonnes horizontales de convoyeurs : l'une (colonne aller 4) pour le déplacement des contenants d'expédition depuis le troisième sous-ensemble de convoyeurs 8 jusqu'à l'opérateur la, et l'autre (colonne retour 5) pour le déplacement inverse.

Une fonction de stockage tampon (aussi appelée « fonction d'accumulation ») d'une quantité déterminée de contenants en amont de l'opérateur (ou l'automate) est réalisée, dans chacun des premier et deuxième circuits, par la colonne aller 3 et 4 (composée de convoyeurs classiques horizontaux). Un contenant de stockage effectue donc le parcours suivant : il est prélevé par un chariot dans le magasin automatisé 7, puis convoyé successivement par l'un des convoyeurs 9a et 9a' (selon qu'il arrive de l'allée 7a ou 7a'), puis par les convoyeurs 6 et 8, et enfin par les convoyeurs de la colonne aller 3, pour être présenté à l'opérateur. Dans l'autre sens (après présentation à l'opérateur), le contenant de stockage effectue le parcours inverse : il est convoyé par les convoyeurs de la colonne retour 2, puis par les convoyeurs 8' et 6', et enfin par l'un des convoyeurs 9b et 9b' (selon qu'il retourne vers l'allée 7a ou 7a'), avant d'être replacé dans le magasin automatisé 7 par un chariot.

Comme mentionné plus haut, les contenants (charges sources et charges cibles) doivent être présentés à l'opérateur dans un ordre voulu formant au moins une séquence déterminée. De manière classique, cet ordre d'arrivée est prédéterminé par le système de pilotage (c'est-à-dire déterminé, pour chaque contenant, avant que ce contenant n'atteigne le poste de préparation) et, si nécessaire, recalculé au cours de l'acheminement des contenants de la sortie du magasin automatisé 7 vers le poste de préparation (par exemple pour tenir compte d'une panne d'un élément du système).

Dans une première implémentation connue (standard), un premier niveau de séquencement est réalisé en déposant sur chacun des convoyeurs 9a et 9a' des charges pré-séquencées (il y a donc des contraintes sur le magasin automatisé 7). En d'autres termes, les charges déposées sur le convoyeur 9a sont dans un ordre cohérent avec l'ordre final souhaité, et les charges déposées sur le convoyeur 9a' sont également dans un ordre cohérent avec l'ordre final souhaité. Puis, un deuxième niveau de séquencement est réalisé en déposant dans l'ordre final souhaité, sur le convoyeur 6, les charges venant des convoyeurs 9a et 9a'. Par exemple, pour une séquence de sept charges, si les charges de rangs 1, 2, 4 et 5 sont stockées dans l'allée 7a elles sont déposées dans cet ordre sur le convoyeur 9a et si les charges de rangs 3 et 6 sont stockées dans l'allée 7a' elles sont déposées dans cet ordre sur le convoyeur 9a' ; puis les sept charges sont déposées sur le convoyeur 6 dans l'ordre croissant (de 1 à 7) de leurs rangs.

Dans une deuxième implémentation connue, afin de relâcher les contraintes sur le magasin automatisé 7, on admet que les contenants ne sortent pas du magasin automatisé 7 dans l'ordre voulu (c'est-à-dire l'ordre dans lequel ils doivent être présentés à l'opérateur). Il est donc nécessaire d'effectuer une opération de séquencement des contenants, entre le magasin automatisé 7 et le poste de préparation où se trouve l'opérateur. La suppression des contraintes de séquencement pesant habituellement sur le magasin automatisé 7 permet une augmentation significative des performances de celui-ci (et plus généralement des différents équipements amont), et donc une réduction de sa taille et sa complexité, et donc de son coût. Dans l'exemple de la figure 1, cette opération de séquencement est effectuée comme suit : les contenants de stockage circulent sur les convoyeurs 6, 8, 8' et 6', et lorsque le contenant de stockage attendu sur les convoyeurs de la colonne aller 3 se présente devant cette dernière (afin de compléter la séquence de contenants de stockage attendus au poste de préparation), celui-ci est transféré sur les convoyeurs de la colonne aller 3, Ce procédé est effectué pour chacun des contenants de stockage attendus dans la séquence (c'est-à-dire dans l'ordre d'arrivée souhaité au poste de préparation).

Les deux implémentations connues précitées (à base de convoyeurs classiques horizontaux), pour réaliser les fonctions de stockage tampon (accumulation) et de séquencement, présentent plusieurs inconvénients.

Tout d'abord, elles présentent une trop forte consommation de m2 à faible hauteur de plan de roulement (750 mm typiquement). A titre d'exemple de cette emprise au sol trop élevée, la surface nécessaire pour six postes de préparation de commandes (comme dans l'exemple de la figure 1) est de l'ordre de 100 m².

Un autre inconvénient est que la densité au sol des convoyeurs classiques horizontaux (compris dans les postes de préparation) est telle qu'elle rend difficile l'accès maintenance à ces convoyeurs (nappe de convoyeurs trop dense).

Un autre inconvénient est que, sauf à augmenter encore l'emprise au sol du poste de préparation (en augmentant la longueur de la colonne aller de chacun des premier et deuxième circuits), il n'est pas possible d'augmenter le nombre de contenants pouvant être accumulés (stockage tampon) en amont de l'opérateur (ou l'automate).

L'invention, dans au moins un mode de réalisation, a notamment pour objectif de fournir un système de stockage tampon et de séquencement de charges permettant de pallier les inconvénients de la technique connue de la figure 1.

Le document EP1681247A1 décrit un appareil pour former une séquence de charges au moyen d'un stockage temporaire. Il comprend : deux convoyeurs d'entrée 4a/4b ; deux unités de levage 9a/9b ; un rack 1 comprenant deux unités 1a/1b conçues chacune comme un convoyeur d'accumulation ; une barre de levage 7 qui s'étend sur toute la longueur du rack 1, et sur laquelle est disposé un convoyeur 8 ; deux moyens de suspension de charge 6a/6b, mobiles le long de la barre de levage 7 et configurés pour prendre une charge dans un des emplacements de stockage du rack 1 et la poser sur le convoyeur 8 ; et un dispositif de retrait 5. Les charges 2 qui arrivent sur les convoyeurs d'entrée 4a/4b sont entrées dans le rack 1 via les unités de levage 9a/9b. Les charges 2 d'une commande donnée sont extraites du rack 1 par les moyens de suspension de charge 6a/6b et placées, en respectant une séquence déterminée, sur le convoyeur 8 supporté par la barre de levage 7, puis la barre de levage 7 est amenée en regard du dispositif de retrait 5 afin que les charges y soient transférées, selon la séquence déterminée, en actionnant le convoyeur 8.

Le document US2015/158677A1 décrit un régulateur d'écoulement de produits, permettant de découpler un flux entrant de produits par rapport à un dispositif en aval. Dans le mode de réalisation de la figure 1, le régulateur d'écoulement de produits comprend (d'amont en aval) : un premier ascenseur tampon 4 ; un ascenseur d'entrée 2 ; une unité de stockage intermédiaire 1 ; un ascenseur de sortie 3 ; et un deuxième ascenseur tampon 5.

### 3. RÉSUMÉ

Dans un mode de réalisation particulier de l'invention, il est proposé un système de stockage tampon et de séquencement de charges, selon la revendication 1.

Le principe général du système proposé consiste à effectuer les fonctions de stockage tampon et de séquencement de charges en utilisant, selon sur une approche tout à fait nouvelle et inventive, deux élévateurs alternatifs (d'entrée et de sortie respectivement) en combinaison avec une unité de stockage tampon, sous le contrôle d'une unité de pilotage configurée pour organiser divers mouvements de charges entre ces entités.

Ladite au moins une unité externe (qui fournit les charges non séquencées) appartient par exemple à la liste non exhaustive suivante :
- un système automatique (par exemple un magasin automatisé de stockage/déstockage) ;
- un système semi-automatique ;
- un système manuel ;
- un autre système de stockage tampon et de séquencement de charges ;
- une combinaison d'au moins deux des systèmes précédents.

La capacité de séquencement (ordonnancement) du système proposé est liée à la quantité de charges pouvant être stockées temporairement dans l'unité de stockage tampon.

La solution proposée présente de nombreux avantages, notamment mais non exclusivement :
- minimisation (voire dans certains cas suppression totale) des contraintes de séquencement en sortie de la (ou les) unité(s) externe(s) par un séquencement des charges en aval de celle(s)-ci, et au plus proche du (ou des) poste(s) de préparation ; cette minimisation (ou suppression) des contraintes permettant de réduire la taille et la complexité, et donc le coût, de la (ou les) unité(s) externe(s) ;
- réduction de l'emprise au sol ;
- optimisation du rendement du système global (comprenant notamment la (ou les) unité(s) externe(s), le système de stockage tampon et de séquencement et le(s) poste(s) de préparation) ;
- optimisation de la réactivité du système global ;
- manipulation de charges multi-formats si des rouleaux motorisés sont utilisés ;
- optimisation des coûts si le système global comprend plusieurs postes de préparation (mutualisation du système de stockage tampon et de séquencement) ;
- etc.

En sortie du système de stockage tampon et de séquencement, plusieurs types de séquences de charges sont réalisables, et notamment mais non exclusivement :
- une séquence comprenant uniquement des charges sources, chaque charge source étant un contenant de stockage de produit(s) ; ou
- une séquence comprenant uniquement des charges cibles, chaque charge cible étant un contenant d'expédition de produit(s) ; ou
- une séquence comprenant une charge cible, qui est un contenant d'expédition de produit(s), suivie d'au moins une charge source, qui est un contenant de stockage de produit(s).

Plusieurs systèmes de stockage tampon et de séquencement (réalisés chacun selon la solution proposée) peuvent être utilisés en parallèle. Par exemple, en amont d'au moins un poste de préparation, un premier système de stockage tampon et de séquencement est utilisé uniquement pour des charges sources, et en parallèle un second système de stockage tampon et de séquencement est utilisé uniquement pour des charges cibles.

Diverses implémentations et caractéristiques du système proposé sont précisées dans le jeu de revendications. Elles sont également détaillées (avec leurs avantages associés) et illustrées à travers des exemples dans la suite de la description.

Dans un autre mode de réalisation de l'invention, il est proposé un procédé selon la revendication 14.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, est une vue de dessus d'un système automatisé de préparation de commandes ;
- la figure 2 est une vue de côté d'un premier exemple de système de stockage tampon et de séquencement de charges selon l'invention ;

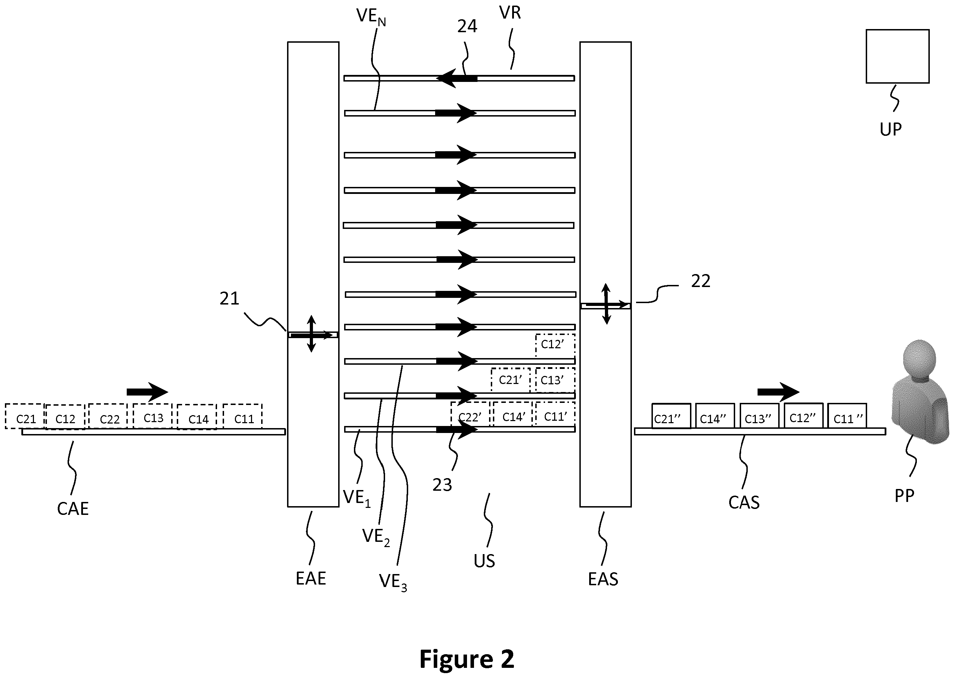

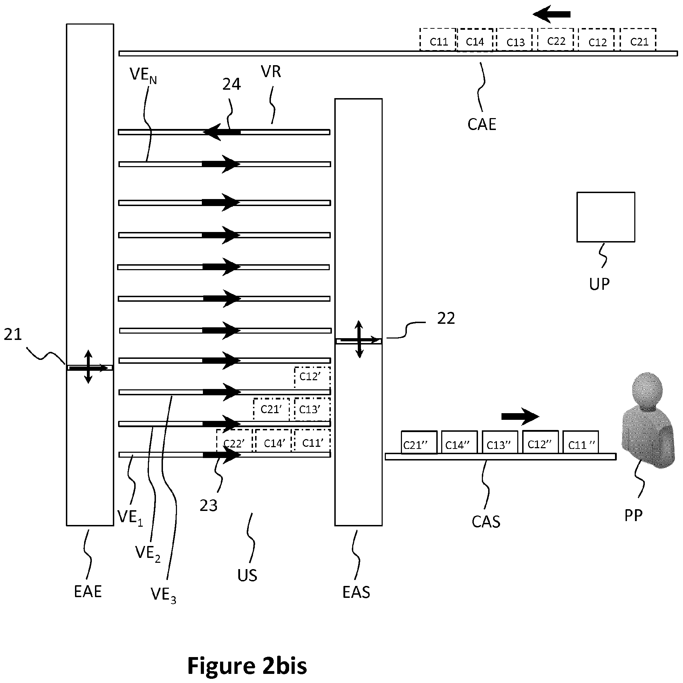

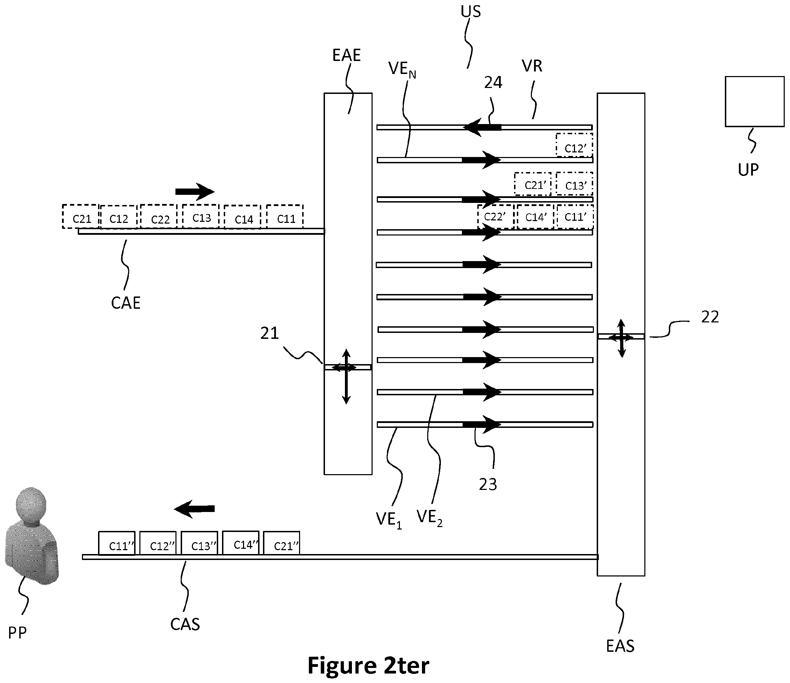

- la figure 2bis illustre une variante du premier exemple de la figure 2 ;
- la figure 2ter illustre une autre variante du premier exemple de la figure 2 ;

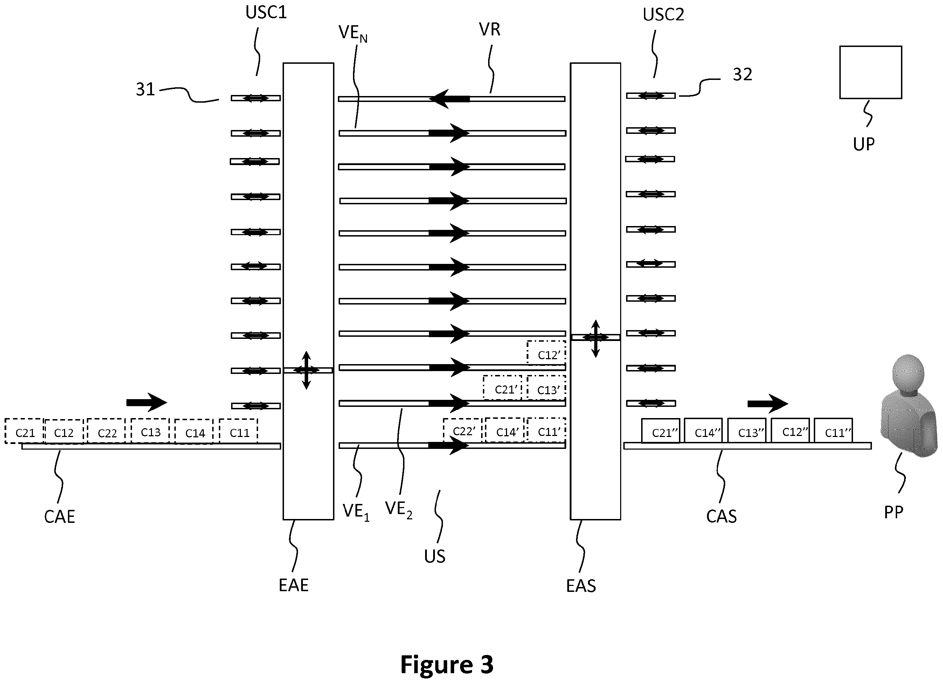

- la figure 3 est une vue de côté d'un deuxième exemple de système de stockage tampon et de séquencement de charges selon l'invention ;

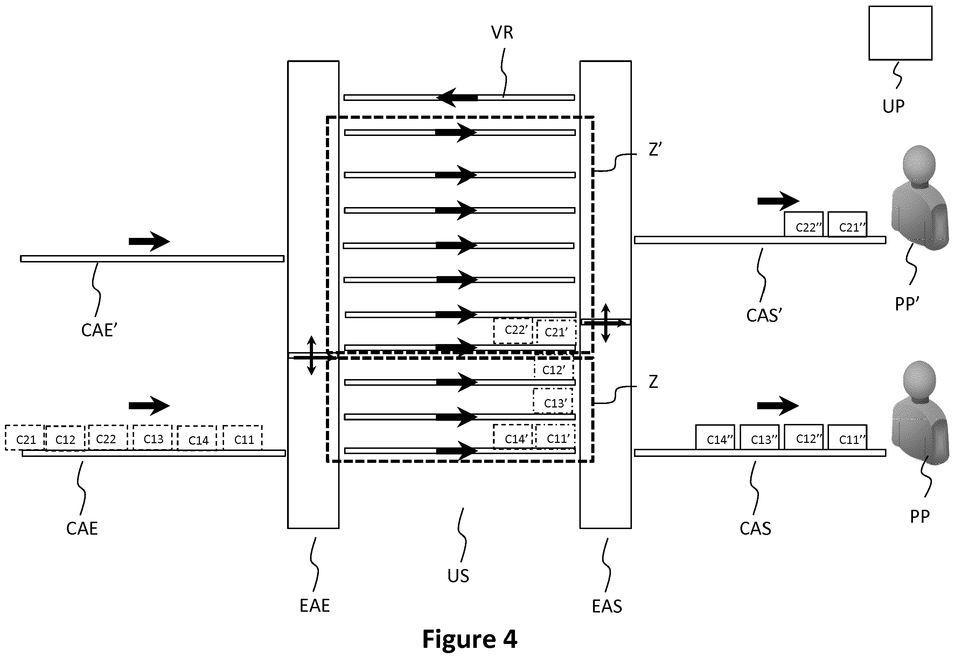

- la figure 4 est une vue de côté d'un troisième exemple de système de stockage tampon et de séquencement de charges selon l'invention ;

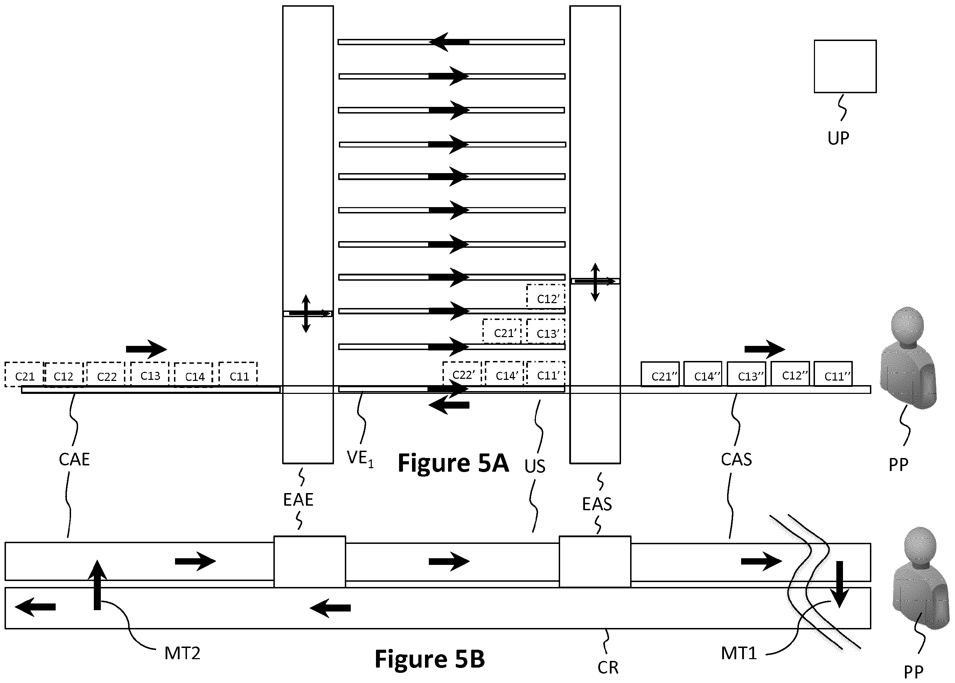

- les figures 5A et 5B sont des vues de côté et de dessus respectivement, d'un quatrième exemple de système de stockage tampon et de séquencement de charges selon l'invention ;

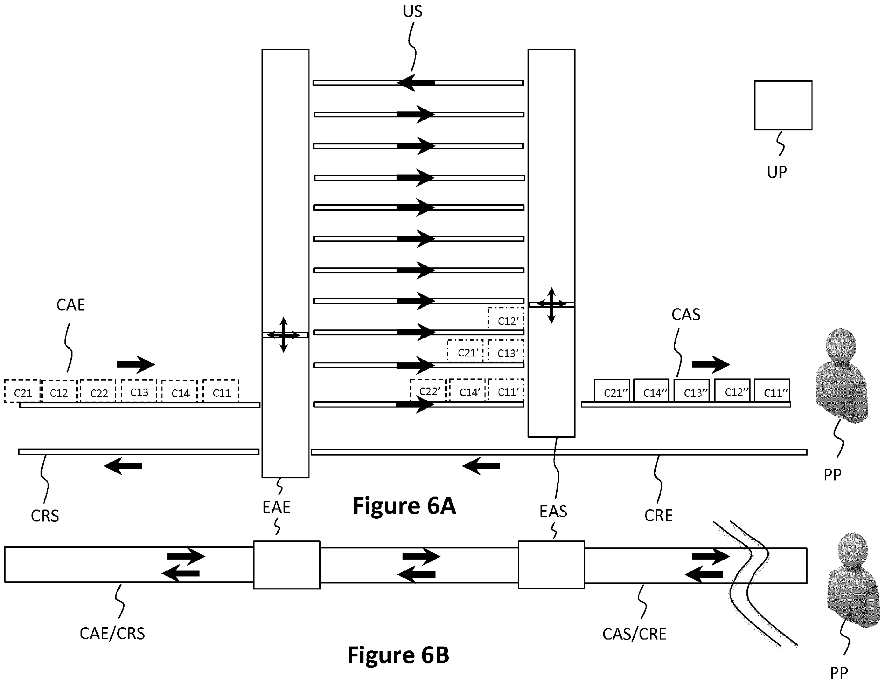

- les figures 6A et 6B sont des vues de côté et de dessus respectivement, d'un cinquième exemple de système de stockage tampon et de séquencement de charges selon l'invention ;

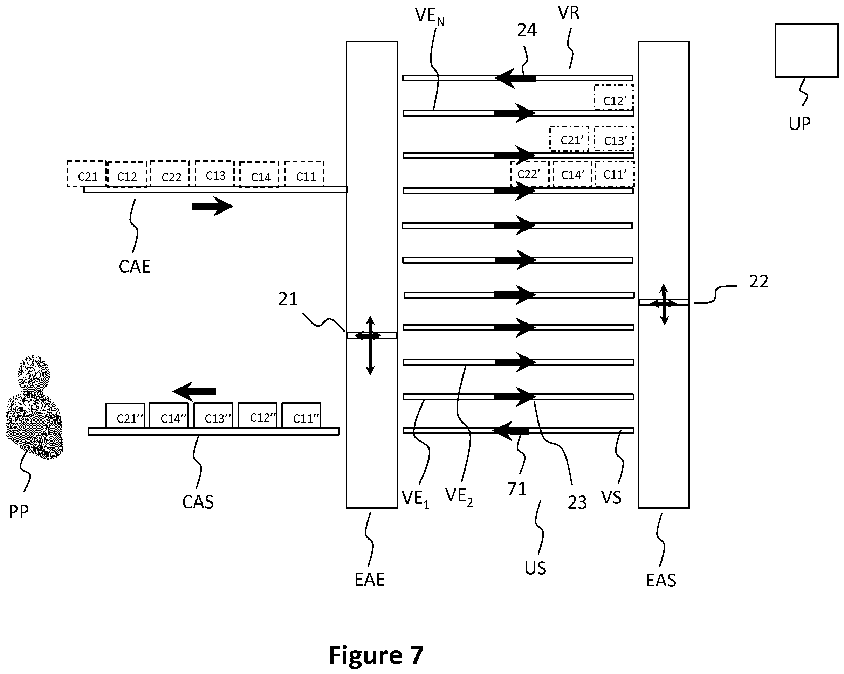

- la figure 7 est une vue de côté d'un sixième exemple de système de stockage tampon et de séquencement de charges selon l'invention ;

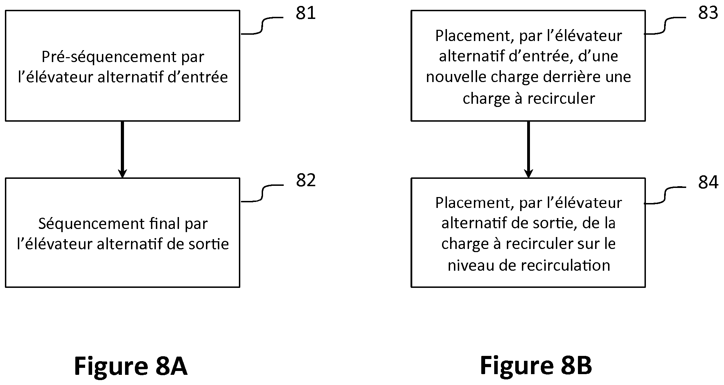

- les figures 8A et 8B sont des organigrammes illustrant deux algorithmes d'un procédé selon un mode de réalisation particulier de l'invention ;

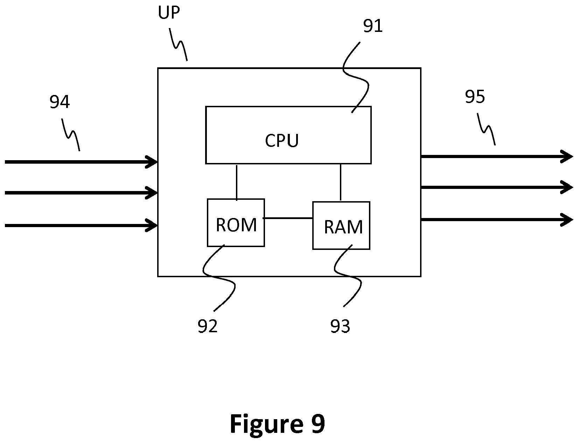

- la figure 9 présente un exemple de structure d'une unité de pilotage selon un mode de réalisation particulier de l'invention ; et

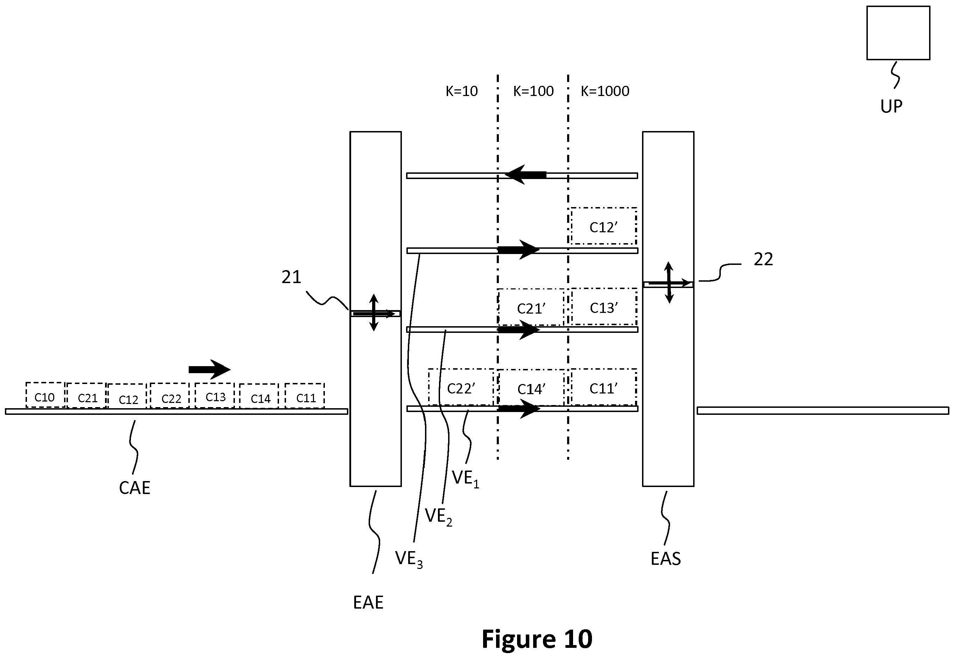

- la figure 10 illustre un exemple de configuration nécessitant l'exécution du processus de recirculation.

### 5. DESCRIPTION DÉTAILLÉE

Sur toutes les figures du présent document, les éléments et étapes identiques sont désignés par une même référence numérique.

La **figure 2** illustre un premier exemple de système de stockage tampon et de séquencement de charges selon l'invention. Il est configuré pour recevoir des charges non séquencées provenant d'une unité externe (non représentée), via un convoyeur aller d'entrée CAE, et fournir des charges séquencées à un poste de préparation PP (occupé par un opérateur ou un robot), via un convoyeur aller de sortie CAS. L'unité externe est par exemple un magasin automatisé de stockage/déstockage.

Dans une variante, l'unité externe est un autre système de stockage tampon et de séquencement de charges. Dans une autre variante, le système de stockage tampon et de séquencement de charges reçoit des charges non séquencées provenant de plusieurs unités externes (soit via plusieurs convoyeurs aller d'entrée CAE spécifiques chacun à une des unités externes, soit via un convoyeur aller d'entrée CAE utilisé conjointement par plusieurs unités externes).

Le système de stockage tampon et de séquencement de charges comprend un élévateur alternatif d'entrée EAE, un élévateur alternatif de sortie EAS, une unité de stockage tampon US et une unité de pilotage UP.

Les élévateurs alternatif d'entrée EAE et de sortie EAS sont des élévateurs verticaux de type discontinu, comprenant chacun une unique nacelle 21, 22 effectuant des mouvements verticaux alternatifs (la nacelle monte et descend alternativement). Par opposition, un « élévateur continu » (aussi appelé « paternoster ») est un élévateur vertical comprenant une pluralité de nacelles circulant en boucle fermée, sans mouvement alternatif. L'unique nacelle 21, 22 est mono-charge (elle comporte un unique niveau comprenant un unique emplacement configuré pour recevoir une charge). Ainsi les élévateurs EAE, EAS sont simples et de faible coût.

L'unique emplacement de nacelle est par exemple équipé d'une section de convoyeur motorisé (ou de tout autre dispositif de transfert) permettant de transférer une charge sur ou en dehors de la nacelle. Dans une variante, l'emplacement de nacelle est équipé de rouleaux libres, dont la mise en mouvement est par exemple assurée par un moyen mécanique escamotable positionné en bout d'un autre équipement (convoyeur ou emplacement tampon). D'autres moyens de mise en mouvement peuvent être envisagés.

Dans une autre variante, l'unique nacelle de chaque les élévateurs EAE, EAS est multicharge (elle comporte plusieurs niveaux et/ou plusieurs emplacements de charge par niveau).

Dans une autre variante, les élévateurs EAE, EAS sont des élévateurs verticaux de type discontinu, comprenant chacun plusieurs nacelles effectuant chacune des mouvements verticaux alternatifs (la nacelle monte et descend alternativement). Chaque nacelle comprend un ou plusieurs niveaux et/ou un plusieurs emplacements de charge par niveau.

L'unité de stockage tampon US comprend :
- N niveaux d'entrée VE₁ à VE_{N}, comprenant chacun un convoyeur de type « premier entré premier sorti » (ou FIFO, pour « First In First Out ») selon un premier sens (indiqué sur la figure 2 par des flèches noires orientées de gauche à droite, notamment celle référencée 23), avec N≥2 (par exemple, N=9 dans une mise en œuvre particulière) ; et
- un niveau de recirculation VR comprenant un convoyeur de type « premier entré premier sorti » selon un deuxième sens (indiqué sur la figure 2 par une flèche noire orientée de droite à gauche et référencée 24) opposé au premier sens. Le niveau de recirculation VR est positionnable à n'importe quel étage. Dans une variante, l'unité de stockage tampon US comprend plusieurs niveaux de recirculation.

L'élévateur alternatif d'entrée EAE et l'élévateur alternatif de sortie EAS sont positionnés respectivement en entrée et en sortie des N niveaux d'entrée de l'unité de stockage tampon US. La nacelle 21 de l'élévateur alternatif d'entrée EAE peut venir en regard de l'entrée de chacun des N niveaux d'entrée de l'unité de stockage tampon US pour y insérer une charge. Elle peut également venir en regard de la sortie du niveau de recirculation VR pour en retirer une charge.

La nacelle 22 de l'élévateur alternatif de sortie EAS peut venir en regard de la sortie de chacun des N niveaux d'entrée de l'unité de stockage tampon US pour en retirer une charge. Elle peut également venir en regard de l'entrée du niveau de recirculation VR pour y insérer une charge.

Le convoyeur aller d'entrée CAE occupe une position permettant un échange direct de charges avec l'élévateur alternatif d'entrée EAE. En d'autres termes, une charge peut passer directement de l'un à l'autre. Dans l'exemple de la figure 2, l'élévateur alternatif d'entrée EAE est positionné entre le convoyeur aller d'entrée CAE et l'unité de stockage tampon US, et le convoyeur aller d'entrée CAE est aligné verticalement avec le niveau d'entrée référencé VE₁ de l'unité de stockage tampon US. Dans des variantes, le convoyeur aller d'entrée CAE peut occuper d'autres positions verticales, et notamment être aligné verticalement avec l'un quelconque des N niveaux d'entrée VE₁ à VE_{N} de l'unité de stockage tampon US, ou encore avec le niveau de recirculation VR. Dans d'autres variantes (notamment celle illustrée sur la **figure 2bis****),** le convoyeur aller d'entrée CAE et l'unité de stockage tampon US sont positionnés du même côté de l'élévateur alternatif d'entrée EAE (dans ce cas, le convoyeur aller d'entrée CAE est positionné au-dessus ou au-dessous de l'unité de stockage tampon US).

Le convoyeur aller de sortie CAS occupe une position permettant un échange direct de charges avec l'élévateur alternatif de sortie EAS. En d'autres termes, une charge peut passer directement de l'un à l'autre. Dans l'exemple de la figure 2, l'élévateur alternatif de sortie EAS est positionné entre l'unité de stockage tampon US et le convoyeur aller de sortie CAS, et le convoyeur aller de sortie CAS est aligné verticalement avec le niveau d'entrée référencé VE₁ de l'unité de stockage tampon US. Dans des variantes, le convoyeur aller de sortie CAS peut occuper d'autres positions verticales, et notamment être aligné verticalement avec l'un quelconque des N niveaux d'entrée VE₁ à VE_{N} de l'unité de stockage tampon US, ou encore avec le niveau de recirculation VR. Dans d'autres variantes (notamment celle illustrée sur la **figure 2ter****),** le convoyeur aller de sortie CAS et l'unité de stockage tampon US sont positionnés du même côté de l'élévateur alternatif de sortie EAS (dans ce cas, le convoyeur aller de sortie CAS est positionné au-dessus ou au-dessous de l'unité de stockage tampon US).

L'unité de pilotage UP permet d'organiser de façon optimale les mouvements des charges dans le système, et notamment sur les élévateurs alternatifs d'entrée EAE et de sortie EAS et l'unité de stockage tampon US, afin de mettre à disposition sur le convoyeur aller de sortie CAS des charges sources selon au moins une séquence déterminée (comportant des charges dans un ordre voulu). A cet effet, l'unité de pilotage UP reçoit des informations (notamment un identifiant de charge) lues, sur les charges passant à différents endroits du système, par des dispositifs de lecture (non représentés), de type lecteur code à barre, lecteur d'étiquette RFID, etc. Ces endroits sont par exemple situés aux extrémités des différents convoyeurs.

Plus précisément, l'unité de pilotage UP organise, sous la contrainte précitée de délivrance d'au moins une séquence déterminée :
- des premiers mouvements de charges depuis le convoyeur aller d'entrée CAE vers l'élévateur alternatif d'entrée EAE ;
- des deuxièmes mouvements de charges depuis l'élévateur alternatif d'entrée EAE vers les N niveaux d'entrée de l'unité de stockage tampon US ;
- des troisièmes mouvements de charges depuis les N niveaux d'entrée de l'unité de stockage tampon US vers l'élévateur alternatif de sortie EAS ;
- des quatrièmes mouvements de charge depuis l'élévateur alternatif de sortie EAS vers le convoyeur aller de sortie CAS ;
- des cinquièmes mouvements de charges depuis l'élévateur alternatif de sortie EAS vers le niveau de recirculation VR ; et
- des sixièmes mouvements de charges depuis le niveau de recirculation VR vers l'élévateur alternatif d'entrée EAE.

L'élévateur alternatif d'entrée EAE et l'élévateur alternatif de sortie EAS fonctionnent simultanément, ce qui permet d'augmenter la cadence du système de stockage tampon et de séquencement.

On présente maintenant, en relation avec les **figures 8A et 8B** (illustrant chacune un algorithme différent), un procédé selon un mode de réalisation particulier de l'invention, mis en œuvre par le système de la figure 2 pour générer (au moins) une séquence comprenant des charges dans un ordre voulu. Plus précisément, l'unité de pilotage UP est configurée pour que le système exécute ces deux algorithmes.

L'algorithme illustré sur la **figure 8A** comprend des étapes référencées 81 et 82.

Dans l'étape 81, l'élévateur alternatif d'entrée EAE effectue un pré-séquencement en plaçant les charges de la séquence en entrée des N niveaux d'entrée VE₁ à VE_{N} de l'unité de stockage tampon US, conformément à un premier jeu de règles comprenant, dans une implémentation particulière, les règles suivantes :
- première règle (R1) : sur chacun des N niveaux d'entrée, une charge donnée possédant un rang donné au sein de la séquence ne doit être précédée d'aucune charge de rang strictement supérieur au rang donné (plusieurs charges peuvent avoir le même rang au sein de la séquence).
- deuxième règle (R2) : si pour une charge plusieurs niveaux d'entrée permettent de respecter la première règle (c'est-à-dire plusieurs réponses possibles), la charge est placée sur celui dont l'écart entre le rang de la charge à stocker et le rang le plus élevé des charges présentes sur niveau d'entrée est le plus faible.
- troisième règle (R3) : dans le cas où la deuxième règle retourne plusieurs réponses possibles, le choix parmi celles-ci se fait selon un critère supplémentaire ou plusieurs critères supplémentaires successifs (le critère suivant étant appliqué en cas de pluralité de réponses possibles au critère courant). Exemples de critères supplémentaires : le niveau d'entrée sur lequel il y a le moins de charges présentes, le niveau d'entrée dont la distance à parcourir est la plus faible, un niveau quelconque parmi les niveaux possibles, etc.
- quatrième règle (R4) : si aucune réponse n'est possible pour les règles une à trois, on choisit un niveau d'entrée vide (les règles une à trois s'appliquent pour des niveaux d'entrée non vides, c'est-à-dire avec au moins un charge présente).
- cinquième règle (R5) : dans le cas où la quatrième règle retourne plusieurs réponses possibles, le choix parmi celles-ci se fait selon un critère supplémentaire ou plusieurs critères supplémentaires successifs (le critère suivant étant appliqué en cas de pluralité de réponses possibles au critère courant). Exemples de critères supplémentaires : le niveau d'entrée dont la distance à parcourir est le plus faible, un niveau quelconque parmi les niveaux possibles, etc.
- sixième règle (R6) : si aucune réponse n'est possible pour les règles une à trois, application du processus de recirculation détaillé ci-après (en relation avec la figure 8B). En résumé, ce processus de recirculation va permettre de placer quand même la charge sur un des N niveaux d'entrée VE₁ à VE_{N}, mais une ou plusieurs déjà présentes vont devoir être recirculées. Pour chaque charge à recirculer qui ressort du niveau de recirculation VR, l'étape 81 est lancée.

Dans l'étape 82, l'élévateur alternatif de sortie EAS effectue un séquencement final en prélevant les charges de la séquence en sortie des N niveaux d'entrée VE₁ à VE_{N} de l'unité de stockage tampon US, selon l'ordre voulu.

En d'autres termes, la fonction de séquencement (ordonnancement) est répartie entre l'élévateur alternatif d'entrée EAE (qui effectue le pré-séquencement) et l'élévateur alternatif de sortie EAS (qui effectue le séquencement final). Ceci permet au système de stockage tampon et de séquencement de charges de fonctionner à une cadence élevée (directement liée à la cadence de travail des élévateurs alternatifs d'entrée et de sortie).

Ainsi, dans l'exemple illustré sur la figure 2, on considère que la séquence à reconstituer sur le convoyeur aller de sortie CAS comprend dans l'ordre les charges suivantes : C11, C12, C13, C14, C21 et C22. L'élévateur alternatif d'entrée EAE reçoit les charges dans le désordre (C11, C14, C13, C22, C12 et C21). Il effectue un pré-séquencement en effectuant les actions successives suivantes :
- placement de la charge C11 sur le niveau d'entrée VE₁ ;
- placement de la charge C14 sur le niveau d'entrée VE₁ ;
- placement de la charge C13 sur le niveau d'entrée VE₂ (pas possible de la placer sur le niveau d'entrée VE₁ car la charge C14 s'y trouve déjà) ;
- placement de la charge C22 sur le niveau d'entrée VE₁ ;
- placement de la charge C12 sur le niveau d'entrée VE₃ (pas possible de la placer sur le niveau d'entrée VE₁ car les charges C14 et C22 s'y trouvent déjà, ni sur le niveau d'entrée VE₂ car la charge C13 s'y trouve déjà) ;
- placement de la charge C21 sur le niveau d'entrée VE₂ (pas possible de la placer sur le niveau d'entrée VE₁ car la charge C22 s'y trouve déjà).

L'algorithme illustré sur la **figure 8B** décrit le processus de recirculation mentionné plus haut, qui comprend des étapes référencées 83 et 84. Il est exécuté si pour une charge donnée il n'existe aucun des N niveaux d'entrée permettant à l'élévateur alternatif d'entrée de respecter la première règle (cf. étape 81 de la figure 8A).

La **figure 10** illustre un exemple de configuration nécessitant l'exécution du processus de recirculation. L'élévateur alternatif d'entrée EAE reçoit les charges dans le désordre (C11, C14, C13, C22, C12, C21 et C10). Les charges C11, C14, C13, C22, C12 et C21 ont été placées (selon le premier jeu de règles) comme illustré sur la figure 10. En revanche, la charge C10 nécessite l'exécution du processus de recirculation.

Dans l'étape 83, l'élévateur alternatif d'entrée place quand même la charge donnée (C10) en entrée d'un niveau d'entrée donné parmi les N niveaux d'entrée. La charge donnée (C10) est donc précédée sur le niveau d'entrée donné de (au moins) une charge de rang supérieur au rang donné, dite (au moins une) charge à recirculer.

Le choix du niveau d'entrée sur lequel va être placée la charge donnée (C10) répond par exemple à un deuxième jeu de règles comprenant, dans une implémentation particulière, les règles suivantes :
- première règle (R1') : recherche du (ou des) niveau(x) d'entrée ayant la note la plus élevée. La note d'un niveau d'entrée donné est par exemple la somme (d'autres fonctions peuvent être envisagées) des notes attribuées aux charges présentes sur le niveau d'entrée donné. La note d'une charge donnée est par exemple du type RxK (d'autres formules combinant R et K peuvent être envisagées), avec R le rang de la charge et K un coefficient fonction de la situation physique de la charge donnée par rapport aux autres charges du même niveau d'entrée et par rapport à l'élévateur alternatif de sortie EAS.
- deuxième règle (R2') : dans le cas où la première règle retourne plusieurs réponses possibles, le choix parmi celles-ci se fait selon un critère supplémentaire ou plusieurs critères supplémentaires successifs (le critère suivant étant appliqué en cas de pluralité de réponses possibles au critère courant). Exemples de critères supplémentaires : le niveau d'entrée sur lequel se trouve la charge avec le numéro de rang le plus élevé le niveau d'entrée sur lequel il y a le moins de charges présentes, le niveau d'entrée dont la distance à parcourir jusqu'au niveau de recirculation est la plus faible, un niveau quelconque parmi les niveaux possibles, etc.

Dans l'exemple illustré sur la figure 10, pour l'application de la première règle (R1'), on considère trois valeurs de K : K=1000, K=100 et K=10, correspondant à trois positions, de la plus proche à la plus éloignée de l'élévateur alternatif de sortie EAS. Pour savoir sur quel niveau d'entrée placer la charge C10, on calcule la note de chacun des niveaux d'entrée. La note du niveau d'entrée VE₁ (sur lequel sont présentes les charges C11, C14 et C22) est : 22^{∗}10 + 14^{∗}100 + 11^{∗}1000 = 12620. La note du niveau d'entrée VE₂ (sur lequel sont présentes les charges C13 et C21) est : 21^{∗}100 + 13^{∗}1000 = 15100. La note du niveau d'entrée VE₃ (sur lequel est présente la charge C12) est : 12^{∗}1000 = 12000. C'est donc le niveau d'entrée VE₂ qui a la note la plus élevée et qui est choisi pour y placer la charge C10.

Dans l'étape 84, l'élévateur alternatif de sortie transfère la charge à recirculer, depuis une sortie du niveau d'entrée donné vers une entrée du niveau de recirculation VR.

En permettant une recirculation (c'est-à-dire un retour vers l'élévateur alternatif d'entrée EAE, et donc potentiellement vers l'entrée de l'unité de stockage tampon US) de certaines charges qui sortent de l'unité de stockage tampon, le niveau de recirculation VR permet d'éviter une situation de blocage de l'unité de stockage tampon (sans en augmenter le nombre N de niveaux d'entrée).

Sur la figure 2 (et également sur les autres figures décrites ci-après), certaines charges sont référencées avec des caractères alphanumériques (« C11 », « C12 », « C13 », etc.) pour illustrer le fonctionnement du système. Afin de faire apparaître sur la même figure des positions successives d'une même charge, la notation suivante est utilisée : pour une première position, la charge est référencée seulement avec ses caractères alphanumériques associés (par exemple « C11 »), pour une deuxième position, la référence de la charge est complétée avec le symbole prime (par exemple « C11' »), pour une troisième position, la référence de la charge est référencée avec le symbole double prime (par exemple « C11" »), etc.

La **figure 3** illustre un deuxième exemple de système de stockage tampon et de séquencement de charges selon l'invention. Il se distingue du premier exemple illustré sur la figure 2 en ce qu'il comprend en outre :
- une première unité de stockage tampon complémentaire USC1 comprenant une pluralité d'emplacements tampons 31, répartis sur une pluralité de niveaux et configurés chacun pour recevoir temporairement au moins une charge provenant de l'élévateur alternatif d'entrée EAE ; et
- une deuxième unité de stockage tampon complémentaire USC2 comprenant une pluralité d'emplacements tampons 32, répartis sur une pluralité de niveaux et configurés chacun pour recevoir temporairement au moins une charge provenant de l'élévateur alternatif de sortie EAS.

L'unité de pilotage UP gère également les unités de stockage tampon complémentaires USC1, USC2. Elle est configurée pour organiser, sous la contrainte précitée de délivrance d'au moins une séquence déterminée :
- des septièmes mouvements de charges entre l'élévateur alternatif d'entrée EAE et la première unité de stockage tampon complémentaire USC1 ; et
- des huitièmes mouvements de charges entre l'élévateur alternatif de sortie EAS et la deuxième unité de stockage tampon complémentaire USC2.

La première unité de stockage tampon complémentaire USC1 permet d'augmenter la capacité de stockage tampon du système, en amont de l'unité de stockage tampon US. L'élévateur alternatif d'entrée EAE peut placer sur les N niveaux d'entrée de l'unité de stockage tampon des charges ayant des provenances diverses : le convoyeur aller d'entrée CAE, la première unité de stockage tampon complémentaire USC1 et le niveau de recirculation VR.

La deuxième unité de stockage tampon complémentaire USC2 permet d'augmenter la capacité de stockage tampon du système, en aval de l'unité de stockage tampon US. L'élévateur alternatif de sortie EAS peut placer sur le convoyeur aller de sortie CAS des charges ayant des provenances diverses : les N niveaux d'entrée de l'unité de stockage tampon et la deuxième unité de stockage tampon complémentaire.

Dans une variante, une des unités de stockage tampon complémentaires USC1 et USC2 n'est pas présente.

La **figure 4** illustre un troisième exemple de système de stockage tampon et de séquencement de charges selon l'invention. Il se distingue du premier exemple illustré sur la figure 2 en ce que :
- il reçoit des charges non séquencées également via un autre convoyeur aller d'entrée CAE'. Les deux convoyeurs aller d'entrée CAE, CAE' sont situés sur deux niveaux différents ; et
- il fournit des charges séquencées également à un autre poste de préparation PP', via un autre convoyeur aller de sortie CAS'. Les deux convoyeurs aller de sortie CAS, CAS' sont situés sur deux niveaux différents.

Dans l'exemple illustré sur la figure 2, on considère qu'une première séquence (comprenant dans l'ordre les charges C11, C12, C13 et C14) est à reconstituer sur le convoyeur aller de sortie référencé CAS, et une deuxième séquence (comprenant dans l'ordre les charges C21 et C22) est à reconstituer sur le convoyeur aller de sortie référencé CAS'.

Dans une mise en œuvre particulière, on affecte au traitement de chaque séquence une zone logique dédiée (c'est-à-dire qui lui est propre) au sein de l'unité de stockage tampon US. Ainsi, les charges de deux séquences destinées à deux postes de préparation ne peuvent pas être mélangées, ce qui permet de ne pas bloquer un poste si l'autre est à l'arrêt. Chaque zone logique dédiée comprend plusieurs niveaux d'entrée. Dans l'exemple de la figure 4, la zone logique dédiée au traitement de la première séquence est référencée Z et comprend les quatre premiers niveaux d'entrée en partant du bas, et celle dédiée au traitement de la deuxième séquence est référencée Z' et comprend les sept autres niveaux d'entrée. Afin d'optimiser l'utilisation des N niveaux d'entrée VE₁ à VE_{N} de l'unité de stockage tampon US, la composition de chaque zone logique est modifiée dynamiquement. Par exemple, un niveau d'entrée vide n'est affecté au traitement d'une séquence (et donc ne fait partie de la zone logique dédiée à ce traitement) que si une charge de cette séquence est effectivement placée sur ce niveau d'entrée (par application de l'un des premier et deuxième jeux de règles présentés plus haut). De même, dès qu'un niveau d'entrée redevient vide il n'est plus affecté à aucun traitement de séquence, et ne fait donc plus partie d'aucune zone logique.

D'autres cas sont envisageables, sachant que le système peut comprendre un ou plusieurs convoyeurs aller d'entrée et un ou plusieurs convoyeurs aller de sortie. Dans une variante, le nombre de convoyeurs aller d'entrée est supérieur à deux. Dans une autre variante, le nombre de postes de préparation (et de convoyeurs aller de sortie) est supérieur à deux. Dans une autre variante, un même convoyeur aller de sortie CAS est utilisé en combinaison avec un système d'aiguillage approprié, pour desservir plusieurs postes de préparation.

Les **figures 5A et 5B** illustrent un quatrième exemple de système de stockage tampon et de séquencement de charges selon l'invention. Il se distingue du premier exemple illustré sur la figure 2 en ce qu'il comprend en outre :
- un convoyeur retour CR, s'étendant parallèlement à, et sur un même plan horizontal que, le convoyeur aller d'entrée CAE, le premier niveau d'entrée VE₁ de l'unité de stockage tampon US et le convoyeur aller de sortie CAS ;
- des premiers moyens de transfert MT1 (table de transfert par exemple), configurés pour faire passer une charge (après que celle-ci a été traitée par le poste de préparation PP) depuis le convoyeur aller de sortie CAS vers le convoyeur retour CR ; et
- des deuxièmes moyens de transfert MT2 (table de transfert par exemple), configurés pour faire passer une charge depuis le convoyeur retour CR vers le convoyeur aller d'entrée CAE (afin que cette charge puisse être à nouveau présentée au poste de préparation, en occupant un nouveau rang souhaité au sein de la séquence).

Les **figures 6A et 6B** illustrent un cinquième exemple de système de stockage tampon et de séquencement de charges selon l'invention. Il se distingue du premier exemple illustré sur la figure 2 en ce qu'il comprend en outre :
- un convoyeur retour d'entrée CRE configuré pour transporter, depuis le poste de préparation PP vers l'élévateur alternatif d'entrée EAE, des charges ayant été traitées par le poste de préparation. Ainsi, des retours de charges sont possibles, permettant de minimiser l'utilisation de l'unité externe et d'améliorer encore la réactivité du système global (retours vers l'unité de stockage tampon US et, éventuellement, retours vers la première unité de stockage tampon complémentaire) ; et
- un convoyeur retour de sortie CRS configuré pour transporter des charges vers au moins une des entités appartenant au groupe comprenant : l'unité externe précitée (non représentée), au moins un autre poste de préparation (non représenté) et au moins une autre unité externe (non représentée). Ainsi, encore d'autres types de retours de charges sont possibles.

Dans l'exemple des figures 6A et 6B, le convoyeur retour d'entrée CRE est positionné sous le convoyeur aller de sortie CAS, l'élévateur alternatif de sortie EAS et l'unité de stockage tampon US. Dans une variante, il est positionné au-dessus de ces trois éléments.

Dans l'exemple des figures 6A et 6B, le convoyeur retour de sortie CRS est positionné sous le convoyeur aller d'entrée CAE. Dans une variante, le convoyeur retour de sortie CRS est positionné au-dessus du convoyeur aller d'entrée CAE.

Dans l'exemple des figures 6A et 6B, le convoyeur retour de sortie CRS est aligné horizontalement avec le convoyeur retour d'entrée CRE, pour limiter les déplacements de l'élévateur alternatif d'entrée EAE. Dans une variante, il n'y a pas un tel alignement horizontal.

L'unité de pilotage UP gère également le convoyeur retour d'entrée CRE et le convoyeur retour de sortie CRS. Elle est configurée pour organiser, sous la contrainte précitée de délivrance d'au moins une séquence déterminée :
- des neuvièmes mouvements de charges depuis le convoyeur retour d'entrée CRE vers l'élévateur alternatif d'entrée EAE ; et
- des dixièmes mouvements de charges depuis l'élévateur alternatif d'entrée EAE vers au moins une des trois entités précitées (unité externe, autre poste de préparation ou autre unité externe).

La **figure 7** illustre un sixième exemple de système de stockage tampon et de séquencement de charges selon l'invention. Il se distingue du premier exemple illustré sur la figure 2 en ce que :
- le convoyeur aller d'entrée CAE et le convoyeur aller de sortie CAS occupent chacun une position permettant un échange direct de charges avec l'élévateur alternatif d'entrée EAE ; et
- l'unité de stockage tampon US comprend (au moins) un niveau de sortie VS comprenant un convoyeur de type « premier entré premier sorti » selon le deuxième sens précité (indiqué sur la figure 7 par une flèche noire orientée de droite à gauche et référencée 71).

Dans l'exemple de la figure 7, le convoyeur aller de sortie CAS est positionné sous le convoyeur aller d'entrée CAE et est aligné verticalement avec le niveau de sortie VS de l'unité de stockage tampon US. Dans des variantes, le convoyeur aller d'entrée CAE et le convoyeur aller de sortie CAS peuvent occuper d'autres positions verticales.

Les mouvements de charge depuis l'élévateur alternatif de sortie EAS vers le convoyeur aller de sortie CAS comprennent : des mouvements de charges depuis l'élévateur alternatif de sortie EAS vers le niveau de sortie VS (de l'unité de stockage tampon US), des mouvements de charges depuis le niveau de sortie VS vers l'élévateur alternatif d'entrée EAE, et des mouvements de charges depuis l'élévateur alternatif d'entrée EAE vers le convoyeur aller de sortie CAS.

La **figure 9** présente un exemple de structure de l'unité de pilotage UP précitée, selon un mode de réalisation particulier de l'invention. L'unité de pilotage UP comprend une mémoire vive 93 (par exemple une mémoire RAM), une unité de traitement 91, équipée par exemple d'un processeur, et pilotée par un programme d'ordinateur stocké dans une mémoire morte 92 (par exemple une mémoire ROM ou un disque dur). A l'initialisation, les instructions de code du programme d'ordinateur sont par exemple chargées dans la mémoire vive 93 avant d'être exécutées par le processeur de l'unité de traitement 91. L'unité de traitement 91 reçoit des signaux d'entrée 94, les traite et génère des signaux de sortie 95.

Les signaux d'entrée 94 comprennent diverses informations relatives au fonctionnement du système global (comprenant notamment la (ou les) unité(s) externe(s), le système de stockage tampon et de séquencement et le(s) poste(s) de préparation), notamment les identifiants de charge lus (par des dispositifs de lecture de type lecteur code à barre, lecteur d'étiquette RFID, etc.) sur les charges quand elles passent à différents endroits du système global (par exemple aux extrémités des différents convoyeurs).

Les signaux de sortie 95 comprennent diverses informations de contrôle pour le pilotage (contrôle) des équipements du système global (notamment au sein du système de stockage tampon et de séquencement), afin de gérer les mouvements des charges dans le système global.

Cette figure 9 illustre seulement une implémentation particulière parmi plusieurs possibles. En effet, l'unité de pilotage UP se réalise indifféremment sur une machine de calcul reprogrammable (un ordinateur PC, un processeur DSP ou un microcontrôleur) exécutant un programme comprenant une séquence d'instructions, et/ou sur une machine de calcul dédiée (par exemple un ensemble de portes logiques comme un FPGA ou un ASIC, ou tout autre module matériel). Dans le cas où l'unité de pilotage est implantée au moins en partie sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

De nombreux autres modes de réalisation peuvent être envisagés sans sortir du cadre de l'invention. On peut notamment prévoir d'utiliser au moins une des unités de stockage tampon complémentaires USC1, USC2 dans l'un quelconque des systèmes des figures 4, 5A/5B, 6A/6B et 7 ; et/ou d'utiliser plusieurs convoyeurs aller d'entrée CAE et/ou plusieurs convoyeurs aller de sortie CAS dans l'un quelconque des systèmes des figures 3, 5A/5B, 6A/6B et 7.

## Revendications

1. Système de stockage tampon et de séquencement de charges, configuré pour recevoir des charges non séquencées provenant d'au moins une unité externe, via au moins un convoyeur aller d'entrée (CAE, CAE'), et fournir des charges séquencées à au moins un poste de préparation (PP, PP'), via au moins un convoyeur aller de sortie (CAS, CAS'), ledit système étant **caractérisé en ce qu'**il comprend :
- une unité de stockage tampon (US) comprenant N niveaux d'entrée (VE₁ à VE_{N}) disposés verticalement, chacun des N niveaux d'entrée comprenant un convoyeur de type « premier entré premier sorti » selon un premier sens et ayant une entrée unique et une sortie unique, avec N≥2 ;
- un élévateur alternatif d'entrée (EAE) et un élévateur alternatif de sortie (EAS), de type discontinu, positionnés respectivement en regard des entrées uniques et en regard des sorties uniques des N niveaux d'entrée, l'élévateur alternatif de sortie (EAS) étant configuré pour prendre les charges uniquement sur les sorties uniques des convoyeurs de type « premier entré premier sorti » des N niveaux d'entrée ; et
- une unité de pilotage (UP) configurée pour organiser, sous une contrainte de délivrance sur ledit au moins un convoyeur aller de sortie d'au moins une séquence comprenant des charges dans un ordre voulu : des premiers mouvements de charges depuis ledit au moins un convoyeur aller d'entrée vers l'élévateur alternatif d'entrée, des deuxièmes mouvements de charges depuis l'élévateur alternatif d'entrée vers les entrées uniques des N niveaux d'entrée de l'unité de stockage tampon, des troisièmes mouvements de charges depuis les sorties uniques des N niveaux d'entrée de l'unité de stockage tampon vers l'élévateur alternatif de sortie, et des quatrièmes mouvements de charge depuis l'élévateur alternatif de sortie vers ledit au moins un convoyeur aller de sortie.
**en ce que** l'unité de stockage tampon comprend au moins un niveau de recirculation (VR) disposés verticalement avec les N niveaux d'entrée (VE₁ à VE_{N}) et comprenant un convoyeur de type « premier entré premier sorti » selon un deuxième sens opposé au premier sens et ayant une entrée unique et une sortie unique,
et **en ce que** l'unité de pilotage est configurée pour organiser, sous ladite contrainte : des cinquièmes mouvements de charges depuis l'élévateur alternatif de sortie vers l'entrée unique dudit au moins un niveau de recirculation, et des sixièmes mouvements de charges depuis la sortie unique dudit au moins un niveau de recirculation vers l'élévateur alternatif d'entrée.

2. Système selon la revendication 1, **caractérisé en ce que** l'unité de pilotage est configurée pour que :
- l'élévateur alternatif d'entrée effectue un pré-séquencement en plaçant les charges de ladite au moins une séquence sur les entrées uniques des N niveaux d'entrée de l'unité de stockage tampon, conformément à une première règle selon laquelle : sur chacun des N niveaux d'entrée, une charge donnée possédant un rang donné au sein de ladite au moins une séquence ne doit être précédée d'aucune charge de rang supérieur au rang donné ; et
- l'élévateur alternatif de sortie effectue un séquencement final en prélevant les charges de ladite au moins une séquence sur les sorties uniques des N niveaux d'entrée de l'unité de stockage tampon, selon l'ordre voulu.

3. Système selon la revendication 2, **caractérisé en ce que** l'unité de pilotage est configurée pour que : si pour une charge à stocker plusieurs niveaux d'entrée permettent de respecter la première règle, la charge à stocker est placée sur un niveau d'entrée présentant le plus faible écart entre un rang de la charge à stocker et un rang le plus élevé parmi les rangs des charges présentes sur le niveau d'entrée.

4. Système selon la revendication 2 ou 3 et la revendication 1, **caractérisé en ce que** l'unité de pilotage est configurée pour que, si pour une charge donnée il n'existe aucun des N niveaux d'entrée permettant à l'élévateur alternatif d'entrée de respecter la première règle :
- l'élévateur alternatif d'entrée place la charge donnée sur l'entrée unique d'un niveau d'entrée donné parmi les N niveaux d'entrée, la charge donnée étant précédée sur ledit niveau d'entrée donné d'au moins une charge de rang supérieur au rang donné, dite au moins une charge à recirculer ; et
- l'élévateur alternatif de sortie transfère ladite au moins une charge à recirculer, depuis la sortie unique du niveau d'entrée donné vers l'entrée unique dudit au moins un niveau de recirculation.

5. Système selon la revendication 4, **caractérisé en ce que** ledit niveau d'entrée donné est choisi car possédant la note la plus élevée parmi des notes associées chacune à un des N niveaux d'entrée, la note associée à un niveau d'entrée étant fonction de notes associées aux charges présentes sur ledit niveau d'entrée, la note associée à une charge étant fonction du rang R de la charge et d'un coefficient K lui-même fonction d'une situation physique de la charge par rapport aux autres charges du même niveau d'entrée et/ou par rapport à l'élévateur alternatif de sortie.

6. Système selon l'une quelconque des revendications 1 à 5, **caractérisé en ce que** ledit au moins un convoyeur aller d'entrée occupe une position permettant un échange direct de charges avec l'élévateur alternatif d'entrée, et **en ce que** et ledit au moins un convoyeur aller de sortie occupe une position permettant un échange direct de charges avec l'élévateur alternatif de sortie.

7. Système selon l'une quelconque des revendications 1 à 5, **caractérisé en ce que** ledit au moins un convoyeur aller d'entrée et ledit au moins un convoyeur aller de sortie occupent chacun une position permettant un échange direct de charges avec l'élévateur alternatif d'entrée,
**en ce que** l'unité de stockage tampon comprend au moins un niveau de sortie (VS) disposés verticalement avec les N niveaux d'entrée (VE₁ à VE_{N}) et comprenant un convoyeur de type « premier entré premier sorti » selon un deuxième sens opposé au premier sens et ayant une entrée unique et une sortie unique,
et **en ce que** les quatrièmes mouvements de charge depuis l'élévateur alternatif de sortie vers ledit au moins un convoyeur aller de sortie comprennent : des mouvements de charges depuis l'élévateur alternatif de sortie vers l'entrée unique dudit au moins un niveau de sortie, des mouvements de charges depuis la sortie unique dudit au moins un niveau de sortie vers l'élévateur alternatif d'entrée, et des mouvements de charges depuis l'élévateur alternatif d'entrée vers ledit au moins un convoyeur aller de sortie.

8. Système selon l'une quelconque des revendications 1 à 7, **caractérisé en ce qu'**il comprend au moins une unité de stockage tampon complémentaire appartenant au groupe comprenant :
- au moins une première unité de stockage tampon complémentaire (USC1) comprenant une pluralité d'emplacements tampons, répartis sur une pluralité de niveaux et configurés chacun pour recevoir temporairement au moins une charge provenant de l'élévateur alternatif d'entrée ; et
- au moins une deuxième unité de stockage tampon complémentaire (USC2) comprenant une pluralité d'emplacements tampons, répartis sur une pluralité de niveaux et configurés chacun pour recevoir temporairement au moins une charge provenant de l'élévateur alternatif de sortie.
et **en ce que** l'unité de pilotage est configurée pour organiser, sous ladite contrainte : des septièmes mouvements de charges entre l'élévateur alternatif d'entrée et ladite au moins une première unité de stockage tampon complémentaire, et/ou des huitièmes mouvements de charges entre l'élévateur alternatif de sortie et ladite au moins une deuxième unité de stockage tampon complémentaire.

9. Système selon l'une quelconque des revendications 1 à 8, **caractérisé en ce que** l'unité de pilotage est configurée pour organiser, sous ladite contrainte, des neuvièmes mouvements de charges depuis un convoyeur retour d'entrée (CRE) vers l'élévateur alternatif d'entrée, ledit convoyeur retour d'entrée étant configuré pour transporter, depuis ledit au moins un poste de préparation vers l'élévateur alternatif d'entrée, des charges ayant été traitées par ledit au moins un poste de préparation.

10. Système selon la revendication 9, **caractérisé en ce que** l'unité de pilotage est configurée pour organiser, sous ladite contrainte, des dixièmes mouvements de charges depuis l'élévateur alternatif d'entrée vers un convoyeur retour de sortie (CRS), ledit convoyeur retour de sortie étant configuré pour transporter des charges vers au moins une des entités appartenant au groupe comprenant : ladite au moins une unité externe, au moins un autre poste de préparation, et au moins une autre unité externe.

11. Système selon l'une quelconque des revendications 1 à 10, **caractérisé en ce que** l'élévateur alternatif d'entrée et l'élévateur alternatif de sortie comprennent chacun une unique nacelle mono-charge (21, 22).

12. Système selon l'une quelconque des revendications 1 à 11, configuré pour fournir au moins deux séquences de charges, chacune à un poste de préparation spécifique et via un convoyeur aller de sortie spécifique, **caractérisé en ce que** l'unité de pilotage est configurée pour affecter au traitement de chaque séquence une zone logique dédiée au sein de l'unité de stockage tampon, chaque zone logique dédiée comprenant plusieurs niveaux d'entrée.

13. Système selon la revendication 12, **caractérisé en ce que** l'unité de pilotage est configurée pour modifier dynamiquement la composition de chaque zone logique.

14. Procédé de génération d'au moins une séquence comprenant des charges dans un ordre voulu, ledit procédé étant **caractérisé en ce qu'**il est mis en œuvre par un système selon l'une quelconque des revendications 1 à 13 et **en ce qu'**il comprend les étapes suivantes :
- l'élévateur alternatif d'entrée effectue un pré-séquencement (81) en plaçant les charges de ladite au moins une séquence sur les entrées uniques des N niveaux d'entrée de l'unité de stockage tampon, conformément à une première règle selon laquelle : sur chacun des N niveaux d'entrée, une charge donnée possédant un rang donné au sein de ladite au moins une séquence ne doit être précédée d'aucune charge de rang supérieur au rang donné ; et
- l'élévateur alternatif de sortie effectue un séquencement final (82) en prélevant les charges de ladite au moins une séquence sur les sorties uniques des N niveaux d'entrée de l'unité de stockage tampon, selon l'ordre voulu.
et **en ce qu'**il comprend les étapes suivantes, si pour une charge donnée il n'existe aucun des N niveaux d'entrée permettant à l'élévateur alternatif d'entrée de respecter la première règle :
- l'élévateur alternatif d'entrée place (83) la charge donnée sur l'entrée unique d'un niveau d'entrée donné parmi les N niveaux d'entrée, la charge donnée étant précédée sur ledit niveau d'entrée donné d'au moins une charge de rang supérieur au rang donné, dite au moins une charge à recirculer ; et
- l'élévateur alternatif de sortie transfère (84) ladite au moins une charge à recirculer, depuis la sortie unique du niveau d'entrée donné vers l'entrée unique dudit au moins un niveau de recirculation.

15. Procédé selon la revendication 14, **caractérisé en ce qu'**il est mis en œuvre par un système selon l'une quelconque des revendications 12 et 13 et **en ce qu'**il comprend une étape d'affectation, au traitement de chacune des au moins deux séquences de charges, d'une zone logique dédiée au sein de l'unité de stockage tampon, chaque zone logique dédiée comprenant plusieurs niveaux d'entrée.

## Patentansprüche

1. Pufferlagerungs- und Sequenzierungssystem für Ladungen zur Aufnahme nicht sequenzierter Ladungen von mindestens einer externen Einheit über mindestens einen Eingangs-Hinförderer (CAE, CAE') und Bereitstellung sequenzierter Ladungen an mindestens eine Vorbereitungsstation (PP, PP') über mindestens einen Ausgangs-Hinförderer (CAS, CAS'), wobei das System **dadurch gekennzeichnet ist, dass** es Folgendes umfasst:
- eine Pufferlagerungseinheit (US), die N Eingangsebenen (VE₁ bis VE_{N}) umfasst, die vertikal angeordnet sind, wobei jede der N Eingangsebenen einen Förderer vom "First-In-First-Out"-Typ in einer ersten Richtung umfasst und einen Einzeleingang und einen Einzelausgang aufweist, wobei N ≥ 2;
- eine alternierende Eingangs-Hebevorrichtung (EAE) und eine alternierende Ausgangs-Hebevorrichtung (EAS), vom unstetigen Typ, die jeweils gegenüber den Einzeleingängen und gegenüber den Einzelausgängen der N Eingangsebenen positioniert sind, wobei die alternierende Ausgangs-Hebevorrichtung (EAS) dazu ausgebildet ist, Ladungen nur an den Einzelausgängen der Förderer vom "First-In-First-Out"-Typ der N Eingangsebenen aufzunehmen; und
- eine Steuerungseinheit (UP), die dazu ausgebildet ist, unter einem Zwang zur Lieferung auf dem mindestens einen Ausgangs-Hinförderer mindestens einer Sequenz, die Ladungen in einer gewünschten Reihenfolge umfasst, Folgendes zu organisieren: erste Bewegungen von Ladungen vom mindestens einen Eingangs-Hinförderer zur alternierenden Eingangs-Hebevorrichtung, zweite Bewegungen von Ladungen von der alternierenden Eingangs-Hebevorrichtung zu den Einzeleingängen der N Eingangsebenen der Pufferlagerungseinheit, dritte Bewegungen von Ladungen von den Einzelausgängen der N Eingangsebenen der Pufferlagerungseinheit zum alternierenden Ausgangsförderer, und vierte Bewegungen von Ladung vom alternierenden Ausgangsförderer zum mindestens einen Ausgangs-Hinförderer,
dadurch, dass die Pufferlagerungseinheit mindestens eine Rückführungsebene (VR) umfasst, die vertikal mit den N Eingangsebenen (VE₁ bis VE_{N}) angeordnet ist und einen Förderer vom "First-In-First-Out"-Typ in einer zweiten Richtung, die der ersten Richtung entgegengesetzt ist, umfasst, und einen Einzeleingang und einen Einzelausgang aufweist, und dadurch, dass die Steuerungseinheit dazu ausgebildet ist, unter dem Zwang Folgendes zu organisieren: fünfte Bewegungen von Ladungen von der alternierenden Ausgangs-Hebevorrichtung zum Einzeleingang der mindestens einen Rückführungsebene, und sechste Bewegungen von Ladungen vom Einzelausgang der mindestens einen Rückführungsebene zur alternierenden Eingangs-Hebevorrichtung.

2. System nach Anspruch 1, **dadurch gekennzeichnet, dass** die Steuerungseinheit so ausgebildet ist, dass:
- die alternierende Eingangs-Hebevorrichtung eine Vorsequenzierung durch Platzieren der Ladungen der mindestens einen Sequenz an den Einzeleingängen der N Eingangsebenen der Pufferlagerungseinheit entsprechend einer ersten Regel durchführt, nach welcher: auf jeder der N Eingangsebenen einer bestimmten Ladung mit einem bestimmten Rang innerhalb der mindestens einen Sequenz keine Ladung mit höherem Rang als der bestimmte Rang vorangehen darf; und
- die alternierende Ausgangs-Hebevorrichtung eine Endsequenzierung durch Entnehmen der Ladungen der mindestens einen Sequenz an den Einzelausgängen der N Eingangsebenen der Pufferlagerungseinheit gemäß der gewünschten Reihenfolge durchführt.

3. System nach Anspruch 2, **dadurch gekennzeichnet, dass** die Steuerungseinheit so ausgebildet ist, dass: wenn es für eine zu lagernde Ladung mehrere Eingangsebenen gestatten, die erste Regel einzuhalten, die zu lagernde Ladung auf einer Eingangsebene platziert wird, die die kleinste Abweichung zwischen einem Rang der zu lagernden Ladung und einem höchsten Rang von den Rängen der Ladungen, die auf der Eingangsebene vorhanden sind, aufweist.

4. System nach Anspruch 2 oder 3 und Anspruch 1, **dadurch gekennzeichnet, dass** die Steuerungseinheit so ausgebildet ist, dass, wenn für eine bestimmte Ladung keine der N Eingangsebenen existiert, die es der alternierenden Eingangs-Hebevorrichtung gestatten, die erste Regel einzuhalten:
- die alternierende Eingangs-Hebevorrichtung die bestimmte Ladung am Einzeleingang einer bestimmten Eingangsebene von den N Eingangsebenen platziert, wobei der bestimmten Ladung auf der bestimmten Eingangsebene mindestens eine Ladung mit höherem Rang als der bestimmte Rang vorangeht, die mindestens eine rückzuführende Ladung; und
- die alternierende Ausgangs-Hebevorrichtung die mindestens eine rückzuführende Ladung vom Einzelausgang der bestimmten Eingangsebene zum Einzeleingang der mindestens einen Rückführungsebene transferiert.

5. System nach Anspruch 4, **dadurch gekennzeichnet, dass** die bestimmte Eingangsebene gewählt ist, da sie den höchsten Wert von Werten aufweist, die jeweils einer der N Eingangsebenen zugeordnet sind, wobei der Wert, der einer Eingangsebene zugeordnet ist, von Werten abhängig sind, die den Ladungen zugeordnet sind, die auf der Eingangsebene vorhanden sind, wobei der Wert, der einer Ladung zugeordnet ist, vom Rang R der Ladung und einem Koeffizienten K abhängig ist, der selbst von einer physischen Lage der Ladung im Verhältnis zu den anderen Ladungen derselben Eingangsebene und/oder im Verhältnis zur alternierenden Ausgangs-Hebevorrichtung abhängig ist.

6. System nach einem der Ansprüche 1 bis 5, **dadurch gekennzeichnet, dass** der mindestens eine Eingangs-Hinförderer eine Position einnimmt, die einen direkten Ladungsaustausch mit der alternierenden Eingangs-Hebevorrichtung gestattet, und dadurch, dass der mindestens eine Ausgangs-Hinförderer eine Position einnimmt, die einen direkten Ladungsaustausch mit der alternierenden Ausgangs-Hebevorrichtung gestattet.

7. System nach einem der Ansprüche 1 bis 5, **dadurch gekennzeichnet, dass** der mindestens eine Eingangs-Hinförderer und der mindestens eine Ausgangs-Hinförderer jeweils eine Position einnehmen, die einen direkten Ladungsaustausch mit der alternierenden Eingangs-Hebevorrichtung gestattet,
dadurch, dass die Pufferlagerungseinheit mindestens eine Ausgangsebene (VS) umfasst, die vertikal mit den N Eingangsebenen (VE₁ bis VE_{N}) angeordnet ist und einen Förderer vom "First-In-First-Out"-Typ in einer zweiten Richtung, die der ersten Richtung entgegengesetzt ist, umfasst, und einen Einzeleingang und einen Einzelausgang aufweist, und dadurch, dass die vierten Ladungsbewegungen von der alternierenden Ausgangs-Hebevorrichtung zum mindestens einen Ausgangs-Hinförderer Folgendes umfassen: Bewegungen von Ladungen von der alternierenden Ausgangs-Hebevorrichtung zum Einzeleingang der mindestens einen Ausgangsebene, Bewegungen von Ladungen vom Einzelausgang der mindestens einen Ausgangsebene zur alternierenden Eingangs-Hebevorrichtung und Bewegungen von Ladungen von der alternierenden Eingangs-Hebevorrichtung zum mindestens einen Ausgangs-Hinförderer.

8. System nach einem der Ansprüche 1 bis 7, **dadurch gekennzeichnet, dass** es mindestens eine ergänzende Pufferlagerungseinheit umfasst, die zur Gruppe gehört, die Folgendes umfasst:
- mindestens eine erste ergänzende Pufferlagerungseinheit (USC1), die eine Mehrzahl von Pufferplätzen umfasst, die über eine Mehrzahl von Ebenen verteilt sind und jeweils dazu ausgebildet sind, zeitweise mindestens eine Ladung von der alternierenden Eingangs-Hebevorrichtung aufzunehmen; und
- mindestens eine zweite ergänzende Pufferlagerungseinheit (USC2), die eine Mehrzahl von Pufferplätzen umfasst, die über eine Mehrzahl von Ebenen verteilt sind und jeweils dazu ausgebildet sind, zeitweise mindestens eine Ladung von der alternierenden Ausgangs-Hebevorrichtung aufzunehmen,
und dadurch, dass die Steuerungseinheit dazu ausgebildet ist, unter dem Zwang Folgendes zu organisieren: siebte Bewegungen von Ladungen zwischen der alternierenden Eingangs-Hebevorrichtung und der mindestens einen ersten ergänzenden Pufferlagerungseinheit und/oder achte Bewegungen von Ladungen zwischen der alternierenden Ausgangs-Hebevorrichtung und der mindestens einen zweiten ergänzenden Pufferlagerungseinheit.

9. System nach einem der Ansprüche 1 bis 8, **dadurch gekennzeichnet, dass** die Steuerungseinheit dazu ausgebildet ist, unter dem Zwang neunte Bewegungen von Ladungen von einem Eingangs-Rückförderer (CRE) zur alternierenden Eingangs-Hebevorrichtung zu organisieren, wobei der Eingangs-Rückförderer dazu ausgebildet ist, Ladungen, die von der mindestens einen Vorbereitungsstation verarbeitet wurden, von der mindestens einen Vorbereitungsstation zur alternierenden Eingangs-Hebevorrichtung zu transportieren.

10. System nach Anspruch 9, **dadurch gekennzeichnet, dass** die Steuerungseinheit dazu ausgebildet ist, unter dem Zwang zehnte Bewegungen von Ladungen von der alternierenden Eingangs-Hebevorrichtung zu einem Ausgangs-Rückförderer (CRS) zu organisieren, wobei der Ausgangs-Rückförderer dazu ausgebildet ist, Ladungen zu mindestens einer der Einheiten zu transportieren, die zur Gruppe gehören, die Folgendes umfassen: die mindestens eine externe Einheit, mindestens eine andere Vorbereitungsstation mindestens eine andere externe Einheit.

11. System nach einem der Ansprüche 1 bis 10, **dadurch gekennzeichnet, dass** die alternierende Eingangs-Hebevorrichtung und die alternierende Ausgangs-Hebevorrichtung jeweils einen einzelnen Einzelladungsträger (21, 22) umfassen.

12. System nach einem der Ansprüche 1 bis 11 zur Bereitstellung mindestens zweier Ladungssequenzen, jeweils an eine bestimmte Vorbereitungsstation und über einen bestimmten Ausgangs-Hinförderer, **dadurch gekennzeichnet, dass** die Steuerungseinheit dazu ausgebildet ist, der Verarbeitung jeder Sequenz einen eigens vorgesehenen Logistikbereich innerhalb der Pufferlagerungseinheit zuzuteilen, wobei jeder eigens vorgesehene Logistikbereich mehrere Eingangsebenen umfasst.

13. System nach Anspruch 12, **dadurch gekennzeichnet, dass** die Steuerungseinheit dazu ausgebildet ist, die Zusammensetzung jedes Logistikbereichs dynamisch zu verändern.

14. Verfahren zur Erzeugung mindestens einer Sequenz, die Ladungen in einer gewünschten Reihenfolge umfasst, wobei das Verfahren **dadurch gekennzeichnet ist, dass** es von einem System nach einem der Ansprüche 1 bis 13 umgesetzt wird, und dadurch, dass es die folgenden Schritte umfasst:
- die alternierende Eingangs-Hebevorrichtung führt eine Vorsequenzierung (81) durch Platzieren der Ladungen der mindestens einen Sequenz an den Einzeleingängen der N Eingangsebenen der Pufferlagerungseinheit entsprechend einer ersten Regel durch, nach welcher: auf jeder der N Eingangsebenen einer bestimmten Ladung mit einem bestimmten Rang innerhalb der mindestens einen Sequenz keine Ladung mit höherem Rang als der bestimmte Rang vorangehen darf; und
- die alternierende Ausgangs-Hebevorrichtung führt eine Endsequenzierung (82) durch Entnehmen der Ladungen der mindestens einen Sequenz an den Einzelausgängen der N Eingangsebenen der Pufferlagerungseinheit gemäß der gewünschten Reihenfolge durch,
und dadurch, dass es die folgenden Schritte umfasst, wenn für eine bestimmte Ladung keine der N Eingangsebenen existiert, die es der alternierenden Eingangs-Hebevorrichtung gestatten, die erste Regel einzuhalten:
- die alternierende Eingangs-Hebevorrichtung platziert (83) die bestimmte Ladung am Einzeleingang einer bestimmten Eingangsebene von den N Eingangsebenen, wobei der bestimmten Ladung auf der bestimmten Eingangsebene mindestens eine Ladung mit höherem Rang als der bestimmte Rang vorangeht, die mindestens eine rückzuführende Ladung;und
- die alternierende Ausgangs-Hebevorrichtung transferiert (84) die mindestens eine rückzuführende Ladung vom Einzelausgang der bestimmten Eingangsebene zum Einzeleingang der mindestens einen Rückführungsebene.

15. Verfahren nach Anspruch 14, **dadurch gekennzeichnet, dass** es von einem System nach einem der Ansprüche 12 und 13 umgesetzt wird, und dadurch, dass es einen Schritt des Zuteilens, der Verarbeitung jeder der mindestens zwei Sequenzen von Ladungen, eines eigens vorgesehenen Logistikbereichs innerhalb der Pufferlagerungseinheit umfasst, wobei jeder eigens vorgesehene Logistikbereich mehrere Eingangsebenen umfasst.

## Claims

1. System for buffer storage and sequencing of loads, configured to receive non-sequenced loads coming from at least one external unit, via at least one outward entry conveyor (CAE, CAE'), and to supply sequenced loads to at least one preparation station (PP, PP'), via at least one outward exit conveyor (CAS, CAS'), said system being **characterised in that** it comprises:
- a buffer storage unit (US) comprising N entry levels (VE₁ to VE_{N}) disposed vertically, each of the N entry levels comprising a conveyor of the "first in first out" type in a first direction and having a single entry and a single exit, with N≥2;
- an alternative entry elevator (EAE) and an alternative exit elevator (EAS), of the discontinuous type, positioned respectively facing the single entries and facing the single exits of the N entry levels, the alternative exit elevator (EAS) being configured to take the loads only on the single exits of the conveyors of the "first in first out" type of the N entry levels; and
- a control unit (UP) configured to organise, subject to a constraint to deliver, on said at least one outward exit conveyor, at least one sequence comprising loads in a required order: first movements of loads from said at least one outward entry conveyor to the alternative entry elevator, second movements of loads from the alternative entry elevator to the single entries of the N entry levels of the buffer storage unit, third movements of loads from the single exits of the N entry levels of the buffer storage unit to the alternative exit elevator, and fourth movements of loads from the alternative exit elevator to said at least one outward exit conveyor,
and **in that** the buffer storage unit comprises at least one recirculation level (VR) disposed vertically with the N entry levels (VE₁ to VE_{N}) and comprising a conveyor of the "first in first out" type in a second direction opposite to the first direction and having a single entry and a single exit,
and **in that** the control unit is configured to organise, subject to said constraint: fifth movements of loads from the alternative exit elevator to the single entry of said at least one recirculation level, and sixth movements of loads from the single exit of said at least one recirculation level to the alternative entry elevator.

2. System according to claim 1, **characterised in that** the control unit is configured so that:
- the alternative entry elevator implements a pre-sequencing by placing the loads of said at least one sequence on the single entries of the N entry levels of the buffer storage unit, in accordance with a first rule according to which: on each of the N entry levels, a given load having a given rank in said at least one sequence must not be preceded by any load of a rank higher than the given rank; and
- the alternative exit elevator implements a final sequence by taking the loads of said at least one sequence on the single exits of the N entry levels of the buffer storage unit, in the required order.

3. System according to claim 2, **characterised in that** the control unit is configured so that: if, for a load to be stored, a plurality of entry levels make it possible to comply with the first rule, the load to be stored is placed on an entry level having the smallest difference between a rank of the load to be stored and the highest rank among the ranks of the loads present on the entry level.

4. System according to claim 2 or 3 and claim 1, **characterised in that** the control unit is configured so that, if for a given load there are not any of the N entry levels enabling the alternative entry elevator to comply with the first rule:
- the alternative entry elevator places the given load on the single entry of a given entry level among the N entry levels, the given load being preceded, on said given entry level, by at least one load with a rank higher than the given rank, referred to as at least one load to be recirculated; and
- the alternative exit elevator transfers said at least one load to be recirculated, from the single exit of the given entry level to the single entry of said at least one recirculation level.

5. System according to claim 4, **characterised in that** said given entry level is chosen since it has the highest mark among the marks each associated with one of the N entry levels, the mark associated with an entry level being dependent on marks associated with the loads present on said entry level, the mark associated with a load being dependent on the rank R of the load and a coefficient K itself dependent on a physical location of the load with respect to the other loads on the same entry level and/or with respect to the alternative exit elevator.

6. System according to any one of claims 1 to 5, **characterised in that** said at least one outward entry conveyor occupies a position allowing a direct exchange of loads with the alternative entry elevator, and **in that** said at least one outward exit conveyor occupies a position allowing a direct exchange of loads with the alternative exit elevator.

7. System according to any one of claims 1 to 5, **characterised in that** said at least one outward entry conveyor and said at least one outward exit conveyor each occupy a position allowing a direct exchange of loads with the alternative entry elevator,
**in that** the buffer storage unit comprises at least one exit level (VS) disposed vertically with the N entry levels (VE₁ to VE_{N}) and comprising a conveyor of the "first in first out" type in a second direction opposite to the first direction and having a single entry and a single exit,
and **in that** the fourth movements of loads from the alternative exit elevator to said at least one outward exit conveyor comprise: movements of loads from the alternative exit elevator to the single entry of said at least one exit level, movements of loads from the single exit of said at least one exit level to the alternative entry elevator, and movements of loads from the alternative entry elevator to said at least one outward exit conveyor.

8. System according to any one of claims 1 to 7, **characterised in that** it comprises at least one complementary buffer storage unit belonging to the group comprising:
- at least one first complementary buffer storage unit (USC1) comprising a plurality of buffer locations, distributed over a plurality of levels and each configured to temporarily receive at least one load coming from the alternative entry elevator; and
- at least one second complementary buffer storage unit (USC2) comprising a plurality of buffer locations, distributed over a plurality of levels and each configured to temporarily receive at least one load coming from the alternative exit elevator,
and **in that** the control unit is configured to organise, subject to said constraint: seventh movements of loads between the alternative entry elevator and said at least one first complementary buffer storage unit, and/or eighth movements of loads between the alternative exit elevator and said at least one second complementary buffer storage unit.

9. System according to any one of claims 1 to 8, **characterised in that** the control unit is configured to organise, subject to said constraint, ninth movements of loads from a return entry conveyor (CRE) to the alternative entry elevator, said return entry conveyor being configured to transport, from said at least one preparation station to the alternative entry elevator, loads that have been processed by said at least one preparation station.

10. System according to claim 9, **characterised in that** the control unit is configured to organise, subject to said constraint, tenth movements of loads from the alternative entry elevator to a return exit conveyor (CRS), said return exit conveyor being configured to transport loads to at least one of the entities belonging to the group comprising: said at least one external unit, at least one other preparation station, and at least one other external unit.

11. System according to any one of claims 1 to 10, **characterised in that** the alternative entry elevator and the alternative exit elevator each comprise a single-load nacelle (21, 22).

12. System according to any one of claims 1 to 11, configured to provide at least two sequences of loads, each to a specific preparation station and via a specific outward exit conveyor, **characterised in that** the control unit is configured to allocate, to the processing of each sequence, a dedicated logic zone within the buffer storage unit, each dedicated logic zone comprising a plurality of entry levels.

13. System according to claim 12, **characterised in that** the control unit is configured to dynamically modify the composition of each logic zone.

14. Method for generating at least one sequence comprising loads in a required order, said method being **characterised in that** it is implemented by a system according to any one of claims 1 to 13 and **in that** it comprises the following steps:
- the alternative entry elevator implements a pre-sequencing (81) by placing the loads of said at least one sequence on the single entries of the N entry levels of the buffer storage unit, in accordance with a first rule according to which: on each of the N entry levels, a given load having a given rank in said at least one sequence must not be preceded by any load with a rank higher than the given rank; and
- the alternative exit elevator implements a final sequencing (82) by taking the loads of said at least one sequence on the single exits of the N entry levels of the buffer storage unit, in the required order,
and **in that** it comprises the following steps, if for a given load there are not any of the N entry levels enabling the alternative entry elevator to comply with the first rule:
- the alternative entry elevator places (83) the given load on the single entry of a given entry level among the N entry levels, the given load being preceded, on said given entry level, by at least one load with a rank higher than the given load, referred to at least one load to be recirculated; and
- the alternative exit elevator transfers (84) said at least one load to be recirculated, from the single exit of the given entry level to the single entry of said at least one recirculation level.

15. Method according to claim 14, **characterised in that** it is implemented by a system according to either one of claims 12 and 13 and **in that** it comprises a step of allocating, to the processing of each of the at least two sequences of loads, a dedicated logic zone within the buffer storage unit, each dedicated logic zone comprising a plurality of entry levels.
